# EUROPEAN PATENT APPLICATION

(11) **EP 1 715 237 A2**
(43) Date of publication of application: **25.10.2006**
(21) Application number: 06008045.4
(22) Date of filing: 19.04.2006
(51) Int. Cl.: F16L 47/06, F16J 15/10

(54) **Pipe fitting with composite gasket assembly**

(30) Priority: 22.04.2005 US 112443
(71) Applicant: Advanced Elastomer Systems, L.P., Akron, Ohio 44311-1065 (US); Plastic Trends, Inc., Shelby Township, MI 48316 (US)
(72) Inventor: Smith, Jeffrey M., Hinkley, OH 44233 (US); Houghton, Jon, Rochester Hills, MI 48306 (US)
(74) Representative: Weber, Thomas

(57) **Abstract**

A pipe fitting (10) includes a body having sockets (16) for receiving pipes therein and a composite gasket (18) housed within a circumferential gasket retention housing integral with the socket (16). The composite gaskets (18) include a V-shaped carrier of relatively stiff plastic having an elastomeric seal portion bonded thereto.

## Description

### BACKGROUND OF THE INVENTION

### Field of the Invention

The present invention relates to a pipe fitting and gasket assembly for conducting fluid flow.

### Disclosure Information

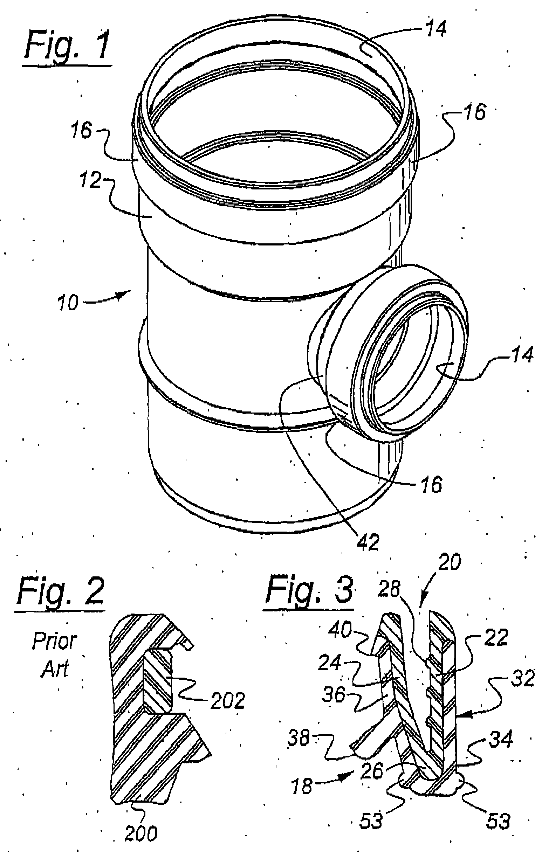

Fluid conducting pipes have been available with slip fittings for a number of years. Some fittings with slip fits use an external nut to tighten a packing on the inserted pipe. This mechanism, however, requires labor and additional parts and may be awkward to install, particularly in below ground or otherwise confined spaces. Other types of slip fittings, particularly those used in applications such as dram or sewer pipes, have used slip fittings without the need for tightening a nut. For example, FIG. 2 illustrates a prior art seal in which plastic band 202 is combined with a very large elastomeric part 200. Unfortunately, the gasket or seal of FIG. 2 is quite expenstve due to the need to provide this large elastomeric body.

### SUMMARY OF THE INVENTION

A pipe fitting for telescopically receiving at least one pipe includes a body having a generally cylindrical wall defining an opening for receiving a pipe. A circumferential gasket retention region projects radially outwardly from a portion of the generally cylindrical wall, so as to define an annular gasket retention race or channel. A gasket having a generally V-shaped cross-section is provided within the gasket retention channel and includes a V-shaped carrier portion of relatively stiff plastic and an elastomeric seal-forming portion. The gasket is adapted to be radially and elastically compressed by a pipe inserted axially into the fitting body. In a prefetted embodiment, the V-shaped carrier portion and elastomeric sealing portion may be co-molded, with the elastomeric portion being formed from a resilient material and the V-shaped carrier being formed from a relatively stiffer material. In this manner, the inventive gasket seal may be easily and economically produced by co-molding,

The gasket of the present invention has an outer leg adapted to abut the floor of the gasket retention channel. The gasket further has an inner leg hinged to the outer leg with the inner leg being adapted to abut a pipe inserted into a fitting into which the gasket has been seated.

The elastomeric seal portion of the inner leg of the gasket preferably includes an annular sealing flap or ring extending radially inwardly from the gasket body such that a pipe inserted telescopically into the fitting compresses the annular sealing ring while simultaneously elastically deforming the V-shaped carrier.

It is an advantage of the present invention that a pipe fitting and gasket assembly according to this invention produces superior results in term of performance under vacuum and resistance to pressure conditions,

It is a further advantage of the present system that leak tight sealing is provided without the need for the use of special tools for assembling various pipe fittings.

Other advantages, as well as objects and features of the present invention, will become apparent to the reader of this specification.

### BRIEF DESCRIPTION OF THE DRAWINGS

FIG. 1 is a perspective view of a pipe fitting having a sealing system according to present invention.

FIG. 2 illustrates a prior art gasket assembly.

FIG. 3 illustrates a gaakst assembly according to one aspect of the present invention.

FIG. 4 illustrates a pipe fitting and joint assembly according to one aspect of the present invention.

### DETAILED DESCRIPTION OF THE PREFERRED EMBODIMENTS

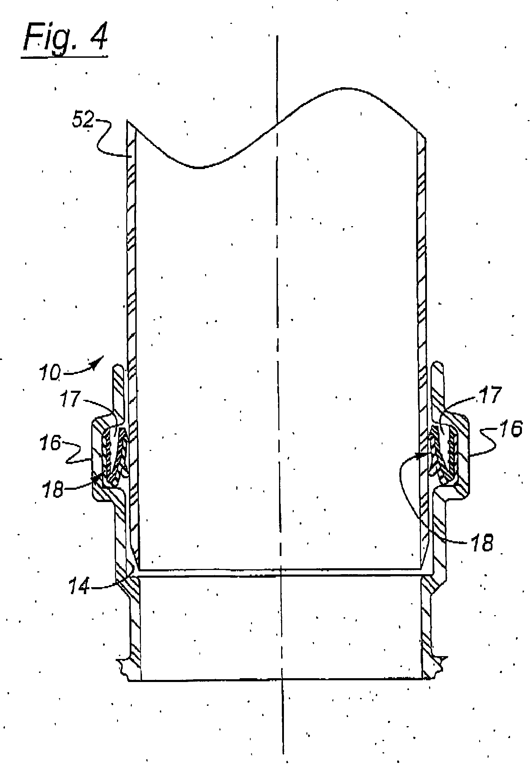

As shown in FIG. 1, pipe fitting 10 (typically formed ofPVC) has generally cylindrical wall 12 with a plurality of generally cylindrical sockets or openings 14 for receiving pipes (such as pipe 52 in FIG. 4) inserted into fitting 10. Gasket 18 is used for sealing pipe 52in fitting 10. Gasket 18 is inserted into and retained by a gasket retention portion 16. As shown with more specificity in FIG. 4, gasket retention portion 16 defines an annular gasket retention channel 17 into which a gasket 18 may be snapped so as to retain gasket 18 both axially and radially.

The details of gasket 18 in the preferred embodiment are shown in FIG. 3. Gasket 18 is preferably a composite of two types of molded materials, but may be a single type of material fabricated to provide two different hardnesses. V-shaped carrier portion 20 serves essentially as a spring element for gasket 18 and preferably comprises polyethylene. Those skilled in the art will appreciate in view of this disclosure that the material for V-shaped carrier portion 20 may be selected from a variety of other known engineering resin materials such as polypropylene, polystyrene, ABS, polyamide, polycarbonate, polyesters (polyethylene terepthalate and polybutylene terepthalate), polyvinylchloride or other plastics. Included also are fiber reinforced plastics, for example, glass-fiber reinforced polypropylene or polyamide, and stiff thermoplastic vulcanizates (TPV). The materials for V-shaped carrier portion 20 may also be selected from other materials, such as, thermoplastic elastomer polyolefins, hydrogenated or unhydrogenated styrene block copolymers, thermoplastic polyurethane elastomers, blends thereof, and plasticized polyvinylchloride, It will be understood from the present disclosure that the material from which V-shaped camerpornon20 is formed should be stiff, yet must flex at hinge portion 26 (best seen in FIG. 3) repeatedly without clacking or breaking. In other words, V-shaped carrier portion 20 biases inner leg 24 against pipe 52 as will be explained more folly hereinafter Most preferably, V-shaped canier portion 20 should have a hardness (Shore D dommeter) of between about 40 to 50. A particularly suitable stiff material that retains flexibility, is the hard TPV product SANTOPRENE® 203-50 from Advanced Elastomer Systems, L.P., which has a Shore D durometer level of 50. This product is a blend of polypropylene and cross-linked EPDM rubber.

V-shaped carrier portion 20 includes outer leg 22 which biases graket 18 against the outer circumference of floor of the annular gasket retention channel 17 defined by gasket retention housing 16; inner leg 24 biases against pipe 52 inserted into fitting 10. As stated, V-shaped carrier portion 20 has a hinge portion 26 which allows the V to flex. Referring to FIG. 4, pipe 52 is telescopically inserted into fitting 10. In turn, gasket 18 is radially compressed by pipe 52 when pipe 52 is inserted into fitting 10. In other words, the V-phaped nature of gasket 18 along with the stiffness of carrier portion 20 creates a spring biasing effect. V-shaped carrier 20 preferably also has a plurality of annular bump stops 28 which help prevent carrier portion 20 from collapsing or deforming more than a predetermined amount under radially directed stress imposed by pipe 52 inserted in the fitting 10. Additional annular beads, such as bead 53 of FIG. 3 may be provided to further control the biasing force of gasket 18.

Elastomeric seal portion 32 comprises an integral part of gasket 18. Elastomeric seal portion 32 maybe made of a number of elastomeric materials known to those skilled in the art. It will be recognized from the present disclosure that the material used to form elastomeric seal, portion 32 is preferably an elastomer or elastomerized material, most preferably having a hardness (Shore A durometer) of from about 45 to about 65 and a more preferably from about 50 to about 60. Elastomeric seal portion 32 has an outer portion 34 which bears against tbe floor of gasket retention housing portion 16. Elastomeric seal 32 also has an ammer portion 36, which in this embodiment (with the remainder of elastomeric seal 32), is bonded to V-shaped carrier 20. Co-molding or co-extrusion of carrier 20 with elastomeric seal portion 32 is expected to comprise an economical process for manufacturing gasket 1 S. It should be noted that the amount of elastomeric material needed to fabrieate a gasket according to the present invention is much less than that required for the prior art gasket illustrated in FIG. 2 due to the "V" cotout. As a result, the cost savings offered by the inventor's gasket may be considerable. As stated, alternatively, carrier 20 and sealing portion 32 may be made of the same type of material, so long as carrier 20 is stiffer than sealing portion 32.

Elastomeric seal portion 32 includes an annular sealing ring of projection 38 which extends radially inwardly from inner portion 36 of elastomeric seal 32, such that a pipe inserted telescopically into fitting 10 compresses and deflects annular sealing ring 38 while simultaneously elastically deforming V-shaped carrier 20 as best shown in FIG. 4.

In order to assure that debris which may be adhering to the outside of pipe 52 does not interfere with annular sealing ring 38, elastomeric seal 32 is further equipped with scraper ring or wiper 40 which extends radially inwardly from inner portion 36 of seal 32, so as to physically remove deposits such as dirt or small rocks from the surface of a pipe as it is inserted into fitting 10. This assures an excellent seal between the outer wall of the pipe being inserted and elastomeric seal 32. Alternatively, the scraper ring may be formed on V-shaped carrier 20. Under vacuum conditions, wiper 40 also helps provide a tight seal.

In exemplary embodiments, the elastomeric material of seal portion 32 may comprise one or more thermoplastic elastomers (TPB), and mixtures thereof. Particularly suitable thermoplastic materials will include dynamically vulcanized TPB, or thermoplastic vulcarrizates (TPV). Particularly suitable are the polyolefin TPV compounds comprising at least one non-crosslinked polyolefin thermoplastic phase and at least one cross-linked polyolefin rubber phase. Other suitable TPEs include the thermoplastic elastomer polyolefins (TPO) without a cross-linked phase, such as homopolymers or copolymers of propylene and ethylene blended with ethylene-propylene rubber; hydrogenated or unhydrogenated styrene block copolymers (SHC), particularly SEBS; and blends of such copolymers, both those considefed thermoplastic and those exhibiting the properties of thermoplastic elastomers; and blends of polyolefins, or blends of one or more of them, with SBC copolymers. Thermoplastic polyurethane elastomers will also be suitable, alone or in blends with other thermoplastics or thermoplastic elastomers. Also, plasticized polyvinylchloride can be used as the elastomeric material. Such materials are well-known in the art, see, Thermoplastic Elastomers (2nd Ed.), Ch. 3, G. Holden, N. Legge, et al (Hanser Publishers, 1996). In a most preferred embodiment the elastomeric material will comprise SANTOPRENE® 101-55W185, a TPV product of Advanced Elastomer Systems, L.P., having a Shore A hardness of 55.

Although the present invention has been described in connection with particular embodiments thereof, it is to be understood that various modifications, alterations and adaptations may be made by those skilled in the art without departing from the spirit and scope of the invention. It is intended that the invention be limited only by the appended claims.

## Claims

1. A composite gasket for sealing a pipe inserted into a pipe fitting, said gasket comprising:
a relatively stiff unitary plastic carrier having an outer leg adapted to abut an inner circular wall of a pipe fitting, and an inner leg hinged to the outer leg, said inner leg being adapted to abut a pipe inserted into a fitting into which said plastic carrier has been seated; and
an elastomeric seal bonded to at least said inner leg, with said seal being adapted for sealing contact with a pipe inserted into a fitting into which said gasket has been mounted,

2. The composite gasket recited in claim 1 wherein said outer leg and said inner leg extend away from a portion of said gasket where said inner leg is hinged to said outer log toward an opening for receiving said pipe in said pipe fitting.

3. An annular gasket, comprising:
a V-shaped carrier portion;
a resilient body bonded to at least part of said V-shaped carrier portion, said V-shaped carrier portion being stiffer than said resilient body; and
said resilient body having an annular wiper portion.

4. The annular gasket recited in claim 3 wherein said V-shaped carrier portion and said resilient body are comprised of the same material.

5. The annular gasket recited in claim 3 wherein said V-shaped carrier portion is comprised of a first material and said resilient body is comprised of a second material, said second material different than said first material.

6. The annular gasket recited in claim 3, wherein said V-shaped carrier portion is formed of a polymer selected from the group consisting of polyethylene, polyproprylene, polystyrene, ABS, polyamide, polycarbonate, polyesters, polyvinyl chloride and combinations thereof, including fiber reinforced plastics, and said resilient body is formed of a polymer selected from the group consisting of thermoplastic vulcanizates, thermoplastic elastomer polyolefins, hydrogentated or unhydrogenated styrene block copolymers, thermoplastic polyurethane elastomers, blends thereof and plasticized polyvinylchloride.

7. The annular gasket recited in claim 3, wherein said V-shaped carrier portion and said resilient body are formed of a polymer selected from the group consisting of thermoplastic vulcanizates, thermoplastic elastomer polyolefins, hydrogentated or unhydrogenated styrene block copolymera, thermoplastic polyurethane elastomers, blends thereof, and plasticized polyvinylcb1oride.

8. The amular gasket recited in claim 3, wherein said V-shaped carrier portion has a harness of from 40 to 50 Shore D durometer and said resilient body has a hardness of from about 45 to about 65 Shore A durometer.
